# EUROPEAN PATENT SPECIFICATION

(11) **EP 1 368 275 B1**
(45) Date of publication and mention of the grant of the patent: **04.01.2006**
(21) Application number: 02705634.0
(22) Date of filing: 15.03.2002
(51) Int. Cl.: B68C 5/00, B68B 7/00

(54) **SHIN BOOT FOR HORSE**
GAMASCHEN FÜR PFERD
GUETRES POUR CHEVAUX

(30) Priority: 16.03.2001 NO 20011334
(43) Date of publication of application: 10.12.2003
(73) Proprietor: LL TROT AB, 163 43 Spanga (SE)
(72) Inventor: Persson, Christer, 2450 Rena (NO)
(74) Representative: Olsson, Jan
(86) International application number: PCT/NO2002/000110
(87) International publication number: WO 2002/074685

(56) References cited:
- DE-U1- 20 106 800
- DE-U1- 20 112 552
- GB-A- 2 241 632
- GB-A- 2 265 812
- US-A- 4 099 269

## Description

The present invention relates to a shin boot for horse, for protection of the knuckles, the calf and the tendons of the horse, and in particular a trotting horse, against impact damages and other damages. Such damages may for instance occur in that a shoe or hoof on a leg strikes another leg during trotting.

It is known that through the years much has been done in the field of equipment for the purpose of making trotting horses run faster, to accelerate faster and to get an increased endurance. Thus, for instance lighter sulkies, lighter harness equipment and lighter coachmen have been provided, but with a limited additional effect.

Attempts have also been made in order to achieve lighter shin boots or shin boots which take up less moisture during use. Thus, it is for instance known, from US-A1 5816032, a shin boot embodiment made of several layers, where the outer, harder layer may consist of a polymer material with closed pores and an inner, softer layer may consist of foam plastics. The two laminate layers are, even when they are glued to each other, sewn together along the edges, which might indicate that the glueing cannot be relied on. A disadvantage with this type of shin boots, therefore, is that they may have a tendency to be split in the boundary between the two layers, in particular if the seam is broken, and thereby the shin boot is not only physically damaged, but also with respect to its possible hydrophobic property.

For the purpose of achieving a shin boot which satisfies the wish of hydrophobia, low weight and good durability there is, according to the present invention, suggested that the shin boot is made as a laminate of pore plastics, where the inner layer of the laminate is soft and has a low density, while the outer layer is hard and has a high density, and the particular with the shin boot according to the invention is that both layers of the laminate consist of the same type of material, for instance expanded polyethylene or polypropylene, with closed pores, said layers being melted and pressed together in the mutually facing surfaces, to a united entity in the same operation as used for forming the shin boot, and that the outer, harder layer is substantially thinner than the inner, softer layer.

With shin boots according to the present invention is achieved a considerable weight reduction of the legs of the horse, and thereby a considerable reduction of the inner work to be performed by the horse in order to "throw" the legs forwardly and swing them backwardly when running, and this weight reduction of the legs of the horse is of a substantially larger importance for the result of the race than the weight of the coachman and the equipment.

Because the shin boot is made of a laminate of pore plastics materials which are of the same kind and which are pressed together to a united entity in the same operation as used for forming of the shin boot, the length and width and contour of the shin boot can, moreover, easily be adapted to the individual horse as the shin boot is cut or trimmed to the desired shape, without thereby reducing the properties of the shin boot, as the laminate layers remain melted together also at the new edges. By cutting or trimming of ordinarily available shin boots the connection between the inner and outer layer will be destroyed and the interior of the shin boot will be opened for access of moisture.

## Claims

1. A shin boot for a horse, for protection of the knuckles, the calf and the tendons of the horse, and in particular a trotting horse, against impact damages and other damages, where the shin boot is made as a laminate of pore plastics, where the inner layer of the laminate is soft and has a low density, while the outer layer is hard and has a high density, **characterized in that** the pore plastics material in both layers of the laminate consists of the same kind of material, for instance expanded polyethylene or polypropylene, with closed pores, said layers being melted and pressed together in the mutually facing surfaces, to a united entity in the same operation as used for forming the shin boot, and that the outer, harder layer is substantially thinner than the inner, softer layer.

## Patentansprüche

1. Gamasche für ein Pferd zum Schutz der Gelenke, der Wade und der Sehnen des Pferdes und insbesondere eines Trabpferdes gegen Stoßverletzungen und andere Verletzungen, wobei die Gamasche aus einem Laminat aus Porenplastik gemacht ist, wobei die innere Schicht des Laminats weich ist und eine niedrige Dichte hat, während die äußere Schicht hart ist und eine hohe Dichte hat,
**dadurch gekennzeichnet,**
**daß** das Porenplastikmaterial in beiden Schichten des Laminats aus der gleichen Art von Material besteht, beispielsweise aus aufgeschäumtem Polyethylen oder Polyprophylen mit geschlossenen Poren, wobei die Schichten geschmolzen und an wechselseitig gegenüberliegenden Oberflächen zu einer Gesamtheit in demselben Verfahren zusammengepresst werden, welches verwendet wird, um die Gamasche zu formen, und daß die äußere, härtere Schicht im wesentlichen dünner ist als die innere, weichere Schicht.

## Revendications

1. Guêtre pour un cheval, pour la protection des articulations, du mollet et des tendons du cheval, et en particulier d'un cheval de trot, vis à vis de blessures par choc et d'autres blessures, la guêtre étant faite d'un stratifié de matière plastique ayant des pores, la couche intérieure du stratifié étant souple et ayant une petite masse volumique, tandis que la couche extérieure est dure et a une grande masse volumique, **caractérisée en ce que** la matière plastique ayant des pores consiste, dans les deux couches du stratifié, en la même nature de matière, par exemple en du polyéthylène ou du polypropylène expansé ayant des pores fermés, les couches étant fondues et comprimées ensemble dans les surfaces se faisant face mutuellement, en une entité réunie, dans la même opération que celle utilisée pour former la guêtre et la couche extérieure plus dure étant sensiblement plus mince que la couche intérieure plus souple
